(19) Europäisches Patentamt
European Patent Office
Office européen des brevets

(11) **EP 2 900 719 B1**

(12) **EUROPÄISCHE PATENTSCHRIFT**

(45) Veröffentlichungstag und Bekanntmachung des Hinweises auf die Patenterteilung:
**09.11.2016 Patentblatt 2016/45**

(21) Anmeldenummer: **13762135.5**

(22) Anmeldetag: **16.09.2013**

(51) Int Cl.:
*C08G 18/48* (2006.01)　　*C08G 18/50* (2006.01)

(86) Internationale Anmeldenummer:
**PCT/EP2013/069084**

(87) Internationale Veröffentlichungsnummer:
**WO 2014/048777 (03.04.2014 Gazette 2014/14)**

(54) **POLYURETHAN- UND POLYISOCYANURAT-HARTSCHAUMSTOFFE AUF BASIS VON FETTSÄUREMODIFIZIERTEN POLYETHERPOLYOLEN**

IMPROVED RIGID POLYURETHANE AND POLYISOCYANURATE FOAMS

MOUSSES RIGIDES DE POLYURÉTHANE ET DE POLYISOCYANURATE AMÉLIORÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2012 EP 12186359**

(43) Veröffentlichungstag der Anmeldung:
**05.08.2015 Patentblatt 2015/32**

(73) Patentinhaber: **BASF SE**
**67056 Ludwigshafen am Rhein (DE)**

(72) Erfinder:
• **KAMPF, Gunnar**
**32351 Stemwede-Haldem (DE)**

• **JACOBMEIER, Olaf**
**32312 Lübbecke (DE)**
• **KALUSCHKE, Tobias**
**49413 Dinklage (DE)**
• **KÖNIG, Christian**
**68165 Mannheim (DE)**

(74) Vertreter: **BASF IP Association**
**BASF SE**
**ZRX-C6**
**67056 Ludwigshafen (DE)**

(56) Entgegenhaltungen:
EP-A1- 0 826 708　　EP-A1- 1 923 417
WO-A1-2010/106067　　WO-A1-2010/151431
DE-A1- 19 630 281

EP 2 900 719 B1

**Beschreibung**

Die vorliegende Erfindung betrifft ein Verfahren zur Herstellung von Polyurethan-und Polyisocyanurat-Hartschaumstoffen unter Verwendung von fettsäuremodifizierten Polyetherpolyolen sowie Polyetherpolyolen auf der Basis von ortho-Toluylendiamin. Die vorliegende Erfindung betrifft außerdem die so erhältlichen Hartschaumstoffe sowie deren Verwendung zur Herstellung von Sandwichelementen mit starren oder flexiblen Deckschichten. Darüber hinaus richtet sich die vorliegende Erfindung auf die zugrundeliegenden Polyolkomponenten.

Die Herstellung von Polyurethan-Hartschaumstoffen ist bekannt und wird in zahlreichen Patent- und Literaturveröffentlichungen beschrieben. Polyurethan-Hartschaumstoffe werden üblicherweise durch Umsetzung von organischen Polyisocyanaten mit einer oder mehreren Verbindungen mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren, in Gegenwart von Treibmitteln, Katalysatoren und gegebenenfalls Hilfsmitteln und/oder Zusatzstoffen hergestellt.

Als Treibmittel zur Herstellung von Polyurethan-Hartschaumstoffen wurden in der Vergangenheit zumeist Fluorchloralkane (FCKW), vorzugsweise Trichlorfluormethan, eingesetzt. Nachteilig an diesen Treibgasen ist jedoch die Belastung der Umwelt. Als Nachfolger für die FCKW werden inzwischen zumeist Kohlenwasserstoffe, vorzugsweise Pentane, eingesetzt. So beschreibt EP-A-421 269 die Verwendung von Cyclopentan und/oder Cyclohexan, gegebenenfalls im Gemisch mit anderen Kohlenwasserstoffen, als Treibmittel. Diese Treibmittel unterscheiden sich jedoch in verschiedener Hinsicht von den halogenierten Treibmitteln. So sind sie mit den übrigen Bestandteilen der Polyurethansysteme schlechter verträglich. Dies führt zu einer raschen Entmischung der Treibmittel enthaltenden Komponenten.

Die Verwendung von C-5 Alkanen, speziell aliphatischem Pentan kann aufgrund einer oftmals geringen Löslichkeit in der Polyolkomponente zu Problemen bei der Herstellung von Verbundelementen führen. Bei einer zu geringen Pentanlöslichkeit der Polyolkomponente kann insbesondere bei Applikation des Reaktionsgemisches in sehr dünnen Schichtdicken, eine erhöhte Tendenz zur Bildung von Oberflächenstörungen am Übergang zwischen Deckschicht und Schaum auftreten. Neben einer optischen Beeinträchtigung der Bauteile können dadurch Verringerungen in der Deckschichthaftung und/oder der Isolationswirkung auftreten.

Zur Behebung dieses Mangels ist es zwar möglich, durch Zusatz von höhermolekularen Polyetheralkoholen die Homogenität der Polyolkomponente soweit zu verbessern, dass eine Verarbeitung auf den üblichen Maschinen möglich ist, es kommt jedoch zu einer Verschlechterung der Aushärtung der Polyurethan-Hartschaumstoffe. Eine schnelle Aushärtung des Reaktionsgemisches ist notwendig und ermöglicht den Verarbeitern die gewünschte hohe Produktivität in Form von kurzen Entformzeiten oder hohen Bandgeschwindigkeiten aufrecht zu erhalten.

Der Zusatz von kurzkettigen Vernetzerpolyolen verbessert in der Regel die Aushärtung, wirkt sich jedoch nachteilig auf die Sprödigkeit des Schaumes aus. Eine zu hohe Sprödigkeit kann zu Rissen im Schaum insbesondere bei Zuschneide- oder Montagevorgängen, sowie zu einer schlechten Deckschichthaftung führen.

Aus dem Stand der Technik ist bekannt, dass anteilmäßig zugegebene OH-Gruppen enthaltende Fettsäureester wie Rizinusöl zu einer verbesserten Pentanlöslichkeit der Polyolkomponente und zu einer geringeren Sprödigkeit des hergestellten Hartschaums beitragen können. Die Druckschriften EP 0 728 783 A1, EP 0 826 708 A1 und WO 2010/106067 A1 beschreiben Verfahren zur Herstellung von PU-Hartschaumstoffen, in welchen die Polyolkomponente Rizinusöl enthält. Rizinusöl kann vorteilhaft für die Oberflächeneigenschaften des Schaums sein. Andererseits kann Rizinusöl in Gegenwart von Wasser, bedingt durch eine Phasentrennung, zu einer Instabilität der reinen Polyolkomponente führen, auch wenn diese kein Pentan enthält. Eine phasenstabile Polyolkomponente ist jedoch eine notwendige Voraussetzung für eine konstante und reproduzierbare Herstellung von Polyurethan-Hartschaumstoffen.

Ein Nachteil des in EP 0 826 708 A1 beschriebenen Verfahrens ist neben der schlechten Haftung der gebildeten PU Hartschaumstoffe auch die hohe Viskosität der Polyolkomponente. Insbesondere bei Verarbeitung auf Doppelbandanlagen sollte die Viskosität der Polyolkomponente ausreichend gering sein, um eine Pumpfähigkeit auf gängigen Produktionsanlagen zu gewährleisten.

Die nach der WO 2010/106067 A1 hergestellten PU-Hartschaumstoffe weisen bereits eine gute Haftung und eine gute Oberflächenbeschaffenheit auf, sind jedoch bezüglich der Lagerstabilität der Polyolkomponente insbesondere bei größeren Wassermengen noch verbesserungsbedürftig.

Das Dokument EP1923417 beschreibt Polyolkomponente zur Herstellung von Polyurethan-und Polyisocyanurat-Hartschaumstoffen, die eine sehr gute Löslichkeit für physikalische Treibmittel und eine hohe Phasenstabilität aufweist (siehe Absatz [0020]). In den Beispielen 2-5 und 7-8 werden Zusammensetzungen offenbart, die ein fettsäuremodifiziertes Polyetherpolyol und ein Polyetherpolyol, das aus der Umsetzung von ortho-Toluylendiamin mit ausschließlich 1,2-Propylenoxid erhalten wird, enthalten.

Die nach dem oben beschriebenen Stand der Technik erhältlichen Schaumstoffe können somit nicht allen Anforderungen gerecht werden.

Es besteht daher die Aufgabe eine Polyolkomponente zur Herstellung von Polyurethan-und Polyisocyanurat-Hartschaumstoffen bereitzustellen, die eine sehr gute Löslichkeit für physikalische Treibmittel und eine hohe Phasenstabilität aufweist. Die Polyolkomponente sollte eine geringe Viskosität aufweisen. Es war außerdem eine Aufgabe der vorliegenden Erfindung, Polyurethan- und Polyisocyanurat-Hartschaumstoffe bereitzustellen, die schnell aushärten und eine geringe Sprödigkeit aufweisen.

Gelöst wird die Aufgabe durch ein Verfahren zur Herstellung von Polyurethan- oder Polyisocyanurat-Hartschaumstoffen umfassend die Umsetzung von

A) mindestens einem Polyisocyanat,

B) mindestens einem fettsäuremodifiziertem Polyetherpolyol,

C) mindestens einem Polyetherpolyol,

D) gegebenenfalls einem oder mehrerer Polyole, die sich von denen der Komponente B) und C) unterscheiden,

E) gegebenenfalls einem oder mehrerer Flammschutzmittel,

F) einem oder mehrerer Treibmittel,

G) einem oder mehrerer Katalysatoren, und

H) gegebenenfalls weiterer Hilfsmittel und/oder Zusatzstoffe,

dadurch gekennzeichnet, dass Komponente C) erhalten wird durch ein Verfahren umfassend

c1) die Umsetzung von ortho-Toluylendiamin und gegebenenfalls weitere Co-Starter mit mindestens einem Alkylenoxid umfassend Ethylenoxid, wobei der Gehalt an Ethylenoxid mehr als 20 Gew.-% bezogen auf die Gewichtsmenge der Alkylenoxide beträgt, und anschließend

c2) die Umsetzung des Reaktionsproduktes aus Stufe c1) mit mindestens einem Alkylenoxid umfassend Propylenoxid, wobei der Gehalt an Propylenoxid mehr als 20 Gew.-% bezogen auf die Gewichtsmenge der Alkylenoxide beträgt, in Anwesenheit eines Katalysators,

sowie mittels der durch Komponenten B) bis H) definierte Polyolkomponente.

Komponente A

Unter Polyisocyanat wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, beträgt der zahlengewichtete Mittelwert der Funktionalität der eingesetzten Komponente A) mindestens 2.

Als Polyisocyanate A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente A) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methyl-pentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethyl-cyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'-und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4-, 2,4-und/oder 2,2-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate der Komponente A) folgende Ausführungsformen:

i) Mehrfunktionelle Isocyanate auf Basis von Toluylendiisocyanat (TDI), insbesondere 2,4-TDI oder 2,6-TDI oder Mischungen aus 2,4- und 2,6-TDI;

ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;

iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDIbasierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unterschiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente A) mindestens zwei, insbesondere mindestens 2,2 und besonders bevorzugt mindestens 2,4. Die Funktionalität der Komponente A) beträgt bevorzugt von 2,2 bis 4 und besonders bevorzugt von 2,4 bis 3.

Vorzugsweise beträgt der Gehalt an Isocyanatgruppen der Komponente A) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente A) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente A) besonders bevorzugt oligomeres Diphenylmethandiisocyanat und weist eine Funktionalität von mindestens 2,4 auf.

Die Viskosität (DIN 53018 bei 25°C) der eingesetzten Komponente A) kann in einem weiten Bereich variieren. Vorzugsweise weist die Komponente A) eine Viskosität von 100 bis 3000 mPa•s, besonders bevorzugt von 200 bis 2500 mPa•s auf.

Komponente B

Erfindungsgemäß besteht Komponente B) aus einem oder mehreren fettsäuremodifizierten Polyetherpolyolen. Unter einem fettsäuremodifizierten Polyetherpolyol ist im Rahmen der vorliegenden Erfindung ein Umsetzungsprodukt aus mindesten einem Startermolekül mit Alkylenoxid und mindestens einer Fettsäure und/oder mindestens einem Fettsäurederivat zu verstehen. Derartige Polyole sind dem Fachmann an sich bekannt.

In einer bevorzugten Ausführungsform ist Komponente B das Umsetzungsprodukt von

B1) von 15 bis 63 Gew.-%, insbesondere von 20 bis 55 Gew.-%, eines oder mehrerer Polyole oder Polyamine mit einer mittleren Funktionalität von 2,5 bis 8,

B2) von 2 bis 30 Gew.-%, insbesondere von 5 bis 25 Gew.-%, einer oder mehrerer Fettsäuren und/oder Fettsäuremonoestern,

B3) von 35 bis 83 Gew.-%, insbesondere von 40 bis 75 Gew.-%, eines oder mehrerer Alkylenoxide mit 2 bis 4 C-Atomen,

jeweils bezogen auf die Gewichtsmenge der Komponenten B1) bis B3), die 100 Gew.-% ergibt.

Bevorzugt weisen die Polyole, Polyamine oder Gemische von Polyolen und/oder Polyaminen der Komponente B1) eine mittlere Funktionalität von 3 bis 6, besonders bevorzugt von 3,5 bis 5,5 auf.

Bevorzugte Polyole oder Polyamine der Komponente B1) sind ausgewählt aus der Gruppe bestehend aus Zuckern (Sorbit, Glucose, Sucrose), Pentaerythrit, Sorbit, Trimethylolpropan, Glycerin, Toluylendiamin, Ethylendiamin, Ethylenglykolen, Propylenglykol und Wasser. Besonders bevorzugt sind Zucker (Sorbit, Glucose, Sucrose), Glycerin, Wasser und Ethylenglykole sowie Gemische daraus, insbesondere bevorzugt sind Gemische enthaltend zwei oder mehr Verbindungen ausgewählt aus Saccharose, Glycerin, Wasser und Diethylenglykol.

In einer speziellen Ausführungsform enthält die Komponente B1) ein Gemisch aus Glycerin und Saccharose.

Der Anteil der Komponente B1) an der Gewichtsmenge der Komponenten B1) bis B3) beträgt zudem besonders bevorzugt von 15 bis 63 Gew.-%, insbesondere von 20 bis 55 Gew.-%, ganz besonders bevorzugt von 23 bis 30 Gew.-%,.

Im Allgemeinen ist die Fettsäure oder der Fettsäuremonoester B2) ausgewählt aus der Gruppe bestehend aus Polyhydroxyfettsäuren, Ricinolsäure, Hydroxyl-modifizierten Ölen, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Stearinsäure, Arachidonsäure, Timnodonsäure, Clupanodonsäure und Cervonsäure. Bevorzugte Fettsäuremonoester sind die Methylester.

In einer bevorzugten Ausführungsform der Erfindung werden die Fettsäuren oder Fettsäuremonoester B2) in Form von Fettsäuremethylestern, Biodiesel oder reinen Fettsäuren eingesetzt. Besonders bevorzugt sind Biodiesel und reine Fettsäuren, speziell bevorzugt sind reine Fettsäuren, vorzugsweise Ölsäure und Stearinsäure, insbesondere Ölsäure.

In einer weiteren bevorzugten Ausführungsform der vorliegenden Erfindung ist die Fettsäure oder der Fettsäuremonoester B2) Ölsäure oder Stearinsäure oder ein Derivat dieser Fettsäuren, besonders bevorzugt sind Ölsäure, Ölsäuremethylester, Stearinsäure und Stearinsäuremethylester. Die Fettsäure oder der Fettsäuremonoester dient in der Regel dazu, die Treibmittellöslichkeit bei der Herstellung von Polyurethanschaumstoffen zu verbessern.

Der Anteil der Komponente B2) an der Gesamtmenge der Komponenten B1) bis B3) beträgt besonders bevorzugt von 2 bis 30 Gew.-%, insbesondere von 5 bis 25 Gew.-%, ganz besonders bevorzugt von 8 bis 20 Gew.-% und insbesondere 12 bis 17 Gew.-%,.

Geeignete Alkylenoxide B3) mit 2 bis 4 C-Atomen sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt sind Gemische aus Ethylenoxid und Propylenoxid mit mindestens 35 Gew.-% Propylenoxid, insbesondere bevorzugt ist reines Propylenoxid.

Die Umsetzung unter Erhalt von Komponente B) wird vorzugsweise in Gegenwart eines Alkoxylierungskatalysators durchgeführt. In einer bevorzugten Ausführungsform wird als Alkoxylierungskatalysator ein Amin verwendet, insbesondere N,N-Dimethylethanolamin oder Imidazole. Besonders bevorzugt ist Imidazol.

Der Anteil an Alkylenoxiden an der Gesamtmenge der Komponente B) beträgt im Allgemeinen von 35 bis 83 Gew.-%, bevorzugt von 40 bis 75 Gew.-%, besonders bevorzugt von 50 bis 65 Gew.-%.

Die erfindungsgemäß im Rahmen von Komponente B) verwendeten fettsäuremodifizierten Polyetherpolyole weisen vorzugsweise eine OH-Zahl von 200 bis 700 mg KOH/g, insbesondere von 300 bis 600 mg KOH/g, besonders bevorzugt von 350 bis 500 mg KOH/g und ganz besonders bevorzugt von 380 bis 480 mg KOH/g auf. Im Allgemeinen weisen die erfindungsgemäß verwendeten fettsäuremodifizierten Polyetherpolyole eine mittlere Funktionalität von 2,5 bis 8, bevorzugt von 3 bis 6, besonders bevorzugt von 3,5 bis 5,5 und insbesondere von 4 bis 5 auf. Die Viskosität der erfindungsgemäß verwendeten fettsäuremodifizierten Polyetherpolyole beträgt im Allgemeinen < 10 000 mPa*s, bevorzugt < 7000 mPa*s, besonders bevorzugt < 5000 mPa*s und speziell < 4500 mPa*s, jeweils gemessen bei 25 °C nach DIN 53018.

Insbesondere die Verwendung von Ölsäuremethylester als Komponente B2) führt zu einer geringen Viskosität der resultierenden Polyolkomponente B) bis H).

Im Allgemeinen ist der Anteil der erfindungsgemäß eingesetzten fettsäuremodifizierten Polyetherpolyole B) > 20 Gew.-%, bevorzugt > 30 Gew.-%, besonders bevorzugt > 40 Gew.-% und insbesondere bevorzugt > 45 Gew.-%, bezogen auf die Summe der Komponenten B) bis H). Im Allgemeinen ist der Anteil der erfindungsgemäßen fettsäuremodifizierten Polyetherpolyole B) < 90 Gew.-%, bevorzugt < 80 Gew.-%, besonders bevorzugt < 70 Gew.-% und insbesondere bevorzugt < 65 Gew.-%, bezogen auf die Summe der Komponenten B) bis H).

Komponente C

Erfindungsgemäß besteht Komponente C) aus einem oder mehreren Polyetherpolyolen, die mittels eines Verfahrens umfassend die Schritte c1) und c2) erhältlich sind. Polyetherpolyole sind im Gegensatz zu fettsäuremodifizierten Polyetherpolyolen Verbindungen, die mindestens eine Etherverknüpfung und mindestens zwei reaktive Hydroxygruppen aufweisen, jedoch keine Esterverknüpfung.

Die erfindungsgemäß verwendeten Polyetherpolyole C) werden somit in einem mindestens zweistufigen Verfahren erhalten, wobei sich die mindestens zwei Stufen in der Zusammensetzung der verwendeten Alkylenoxide unterscheiden. Zumindest die zweite Stufe c2) erfolgt in Anwesenheit eines Alkoxylierungskatalysators, nachfolgend als Katalysator bezeichnet. Vorzugsweise wird der Katalysator in Anschluss an Stufe c1) zugegeben, d. h. die Umsetzung gemäß Stufe c1) erfolgt vorzugsweise in Abwesenheit eines Katalysators.

Geeignete Katalysatoren sind insbesondere Alkalihydroxide, wie Natrium- oder Kaliumhydroxid, oder Alkalialkoholate, wie Natriummethylat, Natrium- oder Kaliumethylat oder Kaliumisopropylat. Geeignete Katalysatoren sind außerdem aminische Alkoxylierungs-Katalysatoren, insbesondere Dimethylethanolamin (DMEOA), Imidazol und Imidazolderivate sowie Mischungen daraus.

Bevorzugte Alkoxylierungskatalysatoren sind KOH und aminische Alkoxylierungs-Katalysatoren. Da bei Verwendung von KOH als Alkoxylierungs-Katalysator der Polyether zunächst neutralisiert werden muss und das entstehende Kaliumsalz abgetrennt werden muss, ist die Verwendung von aminischen Alkoxylierungs-Katalysatoren besonderes bevorzugt. Bevorzugte aminische Alkoxylierungs-Katalysatoren sind ausgewählt aus der Gruppe enthaltend Dimethylethanolamin (DMEOA), Imidazol und Imidazolderivate sowie Mischungen daraus, besonders bevorzugt Imidazol.

Erfindungsgemäß können zur Herstellung der Komponente C) neben ortho-Toluylendiamin weitere Co-Starter eingesetzt werden, die sich von ortho-Toluylendiamin unterscheiden. Ortho-Toluylendiamin (o-TDA) ist gleichbedeutend mit vicinal-Toluylendiamin (vic-TDA) und umfasst die Isomere 2,3-TDA, 3,4-TDA und Gemische daraus. Der Gehalt an meta-TDA, welches in Restmengen im eingesetzten TDA vorhanden sein kann, beträgt vorzugsweise weniger als 20 Gew.-%, insbesondere weniger als 10 Gew.-%, besonders bevorzugt weniger als 5 Gew.-% bezogen auf die Gewichtsmenge des Starters TDA (Rest: ortho-TDA).

Als weitere Co-Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin,1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diaminodiphenylmethan.

Als weitere Co-Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl und N-Ethyldiethanolamin, und Trialkanolamine, wie z.B. Triethanolamin, und Ammoniak. Vorzugsweise verwendet werden zwei oder mehrwertige Alkohole, wie Ethandiol, Propandiol-1,2 und - 1,3, Diethylenglykol, Dipropylenglykol, Butandiol-1,4, Hexandiol-1,6, Glycerin, Trimethylolpropan, Pentaerythrit, Sorbit und Saccharose. Bevorzugt sind die oben genannten primären Amine.

Vorzugsweise wird als Starter für Komponente C) ausschließlich ortho-TDA verwendet. Sofern weitere Co-Starter zum Einsatz kommen, dann erfolgt dies vorzugsweise in einer Menge von 0,001 bis 20 Gew.-%, vorzugsweise in einer Menge von 0,01 bis 10 Gew.-%, bezogen auf die Gesamtmenge aller für die Herstellung von Komponente C) verwendeten Starter.

Erfindungsgemäß erfolgt in Schritt c1) die Umsetzung von ortho-TDA mit mindestens einem Alkylenoxid umfassend Ethylenoxid, wobei der Gehalt an Ethylenoxid mehr als 20 Gew.-% bezogen auf die Gewichtsmenge der in Schritt c1) umgesetzten Alkylenoxide beträgt, und anschließend in Schritt c2) die Umsetzung des Reaktionsproduktes aus Stufe c1) mit mindestens einem Alkylenoxid umfassend Propylenoxid, wobei der Gehalt an 1,2-Propylenoxid mehr als 20 Gew.-% bezogen auf die Gewichtsmenge der in Schritt c2) umgesetzten Alkylenoxide beträgt, wobei Schritt c2) in Anwesenheit eines Katalysators erfolgt.

Im Rahmen von Schritt c1) beträgt der Gehalt an Ethylenoxid vorzugsweise von 40 bis 100 Gew.-% bezogen auf die Gewichtsmenge aller in Schritt c1) umgesetzten Alkylenoxide, insbesondere 50 bis 100 Gew.-%, besonders bevorzugt von 60 bis 100 Gew.-% ganz besonders bevorzugt von 70 bis 100 Gew.-% und insbesondere 100 Gew.-%, d.h. ganz besonders bevorzugt wird im Rahmen von Schritt c1) ausschließlich Ethylenoxid umgesetzt. Die zu 100 Gew.-% fehlende Gewichtsmenge ist vorzugsweise 1,2-Propylenoxid.

Im Rahmen von Schritt c2) beträgt der Gehalt an 1,2-Propylenoxid vorzugsweise von 40 bis 100 Gew.-% bezogen auf die Gewichtsmenge aller in Schritt c2) umgesetzten Alkylenoxide, insbesondere von 50 bis 100 Gew.-%, besonders bevorzugt von 60 bis 100 Gew.-%, ganz besonders bevorzugt von 70 bis 100 Gew.-%, insbesondere 100 Gew.-%, d.h. ganz besonders bevorzugt wird im Rahmen von Schritt c2) ausschließlich 1,2-Propylenoxid umgesetzt. Die zu 100 Gew.-% fehlende Gewichtsmenge ist vorzugsweise Ethylenoxid.

Neben den genannten Alkylenoxiden Ethylenoxid in Schritt c1) und 1,2-Propylenoxid in Schritt c2) können sowohl in Schritt c1) als auch in Schritt c2) weitere Alkylenoxide umgesetzt werden, sofern die erfindungsgemäßen oder bevorzugten Mengenverhältnisse beachtet werden.

Geeignete weitere Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Die angegebenen Mengenverhältnisse beziehen sich auf das Gesamtgewicht der im Rahmen des jeweiligen Schrittes umgesetzten Alkylenoxide. Für Komponente C) bevorzugte Alkylenoxide weisen von 2 bis 6 Kohlenstoffatome auf, insbesondere von 2 bis 4.

Der gesamte Ethylenoxidanteil der im Rahmen von Komponente C) eingesetzten Polyetherole beträgt im Allgemeinen > 2 Gew.-%, bevorzugt > 5 Gew.-%, besonders bevorzugt > 10 Gew.-% und insbesondere > 12.5 Gew.-% bezogen auf den Anteil des gesamten Alkylenoxids. Der Ethylenoxidanteil der im Rahmen von Komponente C) eingesetzten Polyetherpolyole beträgt im Allgemeinen < 90 Gew.-%, bevorzugt < 70 Gew.-%, besonders bevorzugt < 50 Gew.-% und insbesondere < 30 Gew.-%, jeweils bezogen auf die gesamte Gewichtsmenge aller umgesetzten Alkylenoxide. Ganz besonders bevorzugt wird im Rahmen von Komponente C) als Alkylenoxid ausschließlich Ethylenoxid und 1,2-Propylenoxid eingesetzt.

Die im Rahmen von Komponente C) eingesetzten Polyetherpolyole weisen vorzugsweise eine Funktionalität von vorzugsweise 2 bis 6 und insbesondere von 2 bis 5 und zahlenmittlere Molekulargewichte von vorzugsweise 150 bis 3000, besonders bevorzugt von 200 bis 1500 und insbesondere von 250 bis 750 auf. Die OH Zahl der Polyetherpolyole der Komponente C) beträgt vorzugsweise von 800 bis 150, vorzugsweise von 600 bis 250 und insbesondere von 500 bis 300 mg KOH/g.

Im Allgemeinen beträgt der Anteil der Komponente C) von 1 bis 50 Gew.-%, bevorzugt von 2 bis 40 Gew.-%, besonders bevorzugt von 5 bis 30 Gew.-% bezogen auf die Summe der Komponenten B) bis H).

Komponente D)

Erfindungsgemäß können als Komponente D) ein oder mehrere Polyole mitverwendet werden, die sich von denen der Komponenten B) und C) unterscheiden. Geeignete Polyole D) sind dabei insbesondere Polyetherpolyole und Polyesterpolyole.

Geeignete Polyesterpolyole, die sich von den fettsäuremodifizierten Polyetherpolyolen B) unterscheiden, können beispielsweise aus organischen Dicarbonsäuren mit 2 bis 12 Kohlenstoffatomen, vorzugsweise aromatischen, oder Gemischen aus aromatischen und aliphatischen Dicarbonsäuren und mehrwertigen Alkoholen, vorzugsweise Diolen, mit 2 bis 12 Kohlenstoffatomen, vorzugsweise 2 bis 6 Kohlenstoffatomen hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Verwendet werden können ebenso Derivate dieser Dicarbonsäuren, wie beispielsweise Dimethylterephthalat. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der weiteren Polyesterpolyole für Komponente D) kommen auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzes Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxyl-modifizierten Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

In einer insbesondere bevorzugten Ausführungsform werden im Rahmen von Komponente D) keine Polyesterpolyole mit umgesetzt.

Als Komponente D) können zudem alternativ oder zusätzlich ein oder mehrere Polyetherpolyole mit umgesetzt werden. Die Polyetherole D) können nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Propylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diaminodiphenylmethan. Besonders bevorzugt sind die genannten diprimären Amine, beispielsweise Ethylendiamin.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei oder mehrwertige Alkohole, wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose.

Im Allgemeinen beträgt der Anteil der Komponente D) von 0 bis 35 Gew.-%, bevorzugt 0 bis 25 Gew.-%, besonders bevorzugt 0 bis 15 Gew.-%, bezogen auf die Summe der Komponenten B) bis H). Ganz besonders bevorzugt wird gar kein weiteres Polyol D) mitverwendet, d. h. der Anteil der Komponente D) an der Polyolkomponente beträgt ganz besonders bevorzugt 0 Gew.-%.

Komponente E)

Als Flammschutzmittel E) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und PHT-4-Diol, sowie chlorierte Phosphate wie Tris-(2-chlorethyl)phosphat, Tris-(2-chlorpropyl)phosphat (TCPP), Tris(1,3-dichlorpropyl)phosphat, Trikresylphosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP), Diphenylkresylphosphat (DPK) als flüssige Flammschutzmittel eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin, Blähgraphit und gegebenenfalls aromatische Polyester zum Flammfestmachen der Polyurethan-Hartschaumstoffe verwendet werden.

Bevorzugte Flammschutzmittel weisen keine mit Isocyanatgruppen reaktive Gruppen auf. Vorzugsweise sind die Flammschutzmittel bei Raumtemperatur flüssig. Besonders bevorzugt sind TCPP, DEEP, TEP, DMPP und DPK.

Im Allgemeinen beträgt der Anteil der Flammschutzmittel E) 0 bis 30 Gew.-%. Komponente E) wird bevorzugt in einem Anteil von mindestens 1 Gew.-%, besonders bevorzugt mindestens 5 Gew.-% bezogen auf die Summe der Komponenten B) bis H) verwendet. Andererseits wird Komponente E) bevorzugt in einem Anteil von höchstens 20 Gew.-%, besonders bevorzugt höchstens 15 Gew.-% bezogen auf die Summe der Komponenten B) bis H) verwendet.

Komponente F)

Zu Treibmitteln F), welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den Polyisocyanaten A) inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und isoPentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden keine halogenierten Kohlenwasserstoffe als Treibmittel verwendet. Vorzugsweise werden als chemische Treibmittel Wasser, Ameisensäure-Wasser-Mischungen oder Ameisensäure verwendet, besonders bevorzugte chemische Treibmittel sind Ameisensäure-Wasser-Mischungen sowie Wasser. Vorzugsweise werden als physikalische Treibmittel Pentanisomere, insbesondere n-Pentan und/oder Cyclopentan, bzw. Mischungen von Pentanisomeren verwendet.

Ganz besonders bevorzugt werden die Treibmittel der Komponente F) ausgewählt aus der Gruppe bestehend aus Wasser, Ameisensäure und Pentan, insbesondere aus der Gruppe Wasser und Pentan Ausdrücklich bevorzugt ist als Komponente F) eine Mischung aus Wasser und Pentan.

Die Treibmittel sind entweder ganz oder teilweise in der Polyolkomponente (d.h. B+C+D+E+F+G+H) gelöst oder werden direkt vor dem Verschäumen der Polyolkomponente über einen Statikmischer zudosiert. Für gewöhnlich liegen Wasser, Ameisensäure-Wasser-Mischungen oder Ameisensäure ganz oder teilweise in der Polyolkomponente gelöst vor. Das physikalische Treibmittel (beispielsweise Pentan) und gegebenenfalls der Rest des chemischen Treibmittels wird "online", d. h. unmittelbar vor der Herstellung des Hartschaumstoffs, dosiert.

Zu der Polyolkomponente wird in situ Pentan, eventuell ein Teil des chemischen Treibmittels, sowie teilweise oder vollständig der Katalysator zugegeben. Die Hilfs- und Zusatzstoffe, wie auch die Flammschutzmittel sind bereits im Polyolblend enthalten.

Die eingesetzte Menge des Treibmittels bzw. der Treibmittelmischung liegt bei 1 bis 45 Gew.-%, vorzugsweise 1 bis 30 Gew.-%, besonders bevorzugt 1,5 bis 20 Gew.-%, jeweils bezogen auf die Summe der Komponenten B) bis H).

Dient Wasser, Ameisensäure oder eine Ameisensäure-Wasser-Mischung als Treibmittel, so wird es vorzugsweise der Polyolkomponente (B+C+D+E+F+G+H) in einer Menge von 0,2 bis 10 Gew.-%, bezogen auf die Komponente B), zugesetzt. Der Zusatz des Wassers, der Ameisensäure oder der Ameisensäure-Wasser-Mischung kann in Kombination mit dem Einsatz der anderen beschriebenen Treibmittel erfolgen. Bevorzugt wird Wasser oder eine Ameisensäure-Wasser-Mischung in Kombination mit Pentan eingesetzt.

Komponente G

Als Katalysatoren G) zur Herstellung der Polyurethan-Hartschaumstoffe werden insbesondere Verbindungen verwendet, die die Reaktion der reaktive Wasserstoffatome, insbesondere Hydroxylgruppen, enthaltenden Verbindungen der Komponenten B) bis H) mit den Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo.-(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)-ethanol, N,N',N"-Tris-(dialkylaminoalkyl)hexahydrotriazine, z.B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen. Vorzugsweise verwendet werden 0,001 bis 10 Gew.-teile Katalysator bzw. Katalysatorkombination, bezogen (d. h. gerechnet) auf 100 Gewichtsteile der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Die Katalysatoren werden zweckmäßigerweise in der geringsten wirksamen Menge verwendet. Der Anteil der Komponente G) an der Gesamtmenge der Komponenten B) bis H) beträgt vorzugsweise von 0,001 bis 15 Gew.-%, insbesondere von 0,01 bis 10 Gew.-% jeweils bezogen auf die Gewichtsmenge der Komponenten B) bis H).

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

Komponente H

Der Reaktionsmischung zur Herstellung der Polyurethan-Hartschaumstoffe können gegebenenfalls noch weitere Hilfsmittel und/oder Zusatzstoffe H) zugesetzt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-teile, vorzugsweise 0,01 bis 5 Gew.-teile bezogen auf das Gewicht der Komponenten B) bis H) angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 - 50 Gew.-%, vorzugsweise 1 - 40 Gew.-%, bezogen auf das Gewicht der Komponenten B) bis H), zugegeben, wobei jedoch der Gehalt an Matten, Vliesen und Geweben aus natürlichen und synthetischen Fasern Werte bis 80 Gew.-%, bezogen auf das Gewicht der Komponenten B) bis H), erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Die Polykomponente der vorliegenden Erfindung besteht vorzugsweise aus folgenden Komponenten:

20 bis 90 Gew.-% der Komponente B),
1 bis 50 Gew.-% der Komponente C),
0 bis 35 Gew.-% der Komponente D),
0 bis 30 Gew.-% Komponente E),

gegebenenfalls 1 bis 45 Gew.-% Komponente F),

0,001 bis 15 Gew.-% Komponente G), und
0,01 bis 10 Gew.-% Komponente H),

jeweils wie vorstehend definiert und jeweils bezogen auf das Gesamtgewicht der Komponenten B) bis H), wobei sich die Gew.-% zu 100 Gew.-% ergänzen.

Besonders bevorzugt besteht die erfindungsgemäße Polyolkomponente aus

30 bis 70 Gew.-% der Komponente B),
2 bis 40 Gew.-% der weiteren Komponente C),
0 bis 25 Gew.-% der Komponente D),
1 bis 20 Gew.-% Komponente E),

gegebenenfalls 1 bis 30 Gew.-% Komponente F),

0,01 bis 10 Gew.-% Komponente G), und
0,01 bis 5 Gew.-% Komponente H),

jeweils wie vorstehend definiert und jeweils bezogen auf das Gesamtgewicht der Komponenten B) bis H), wobei sich die Gew.-% zu 100 Gew.-% ergänzen.

Besonders bevorzugt beträgt der Anteil der Komponente D) 0 Gew.-%.

Zur Herstellung der erfindungsgemäßen Polyurethan-Hartschaumstoffe werden die organischen Polyisocyanate A), die fettsäuremodifizierten Polyetherpolyole B), die speziellen Polyesterpolyole C), gegebenenfalls die Polyetherole D) und die weiteren Komponenten E) bis H) in solchen Mengen vermischt, dass das Äquivalenzverhältnis von NCO-Gruppen der Polyisocyanate A) zur Summe der reaktiven Wasserstoffatome der Komponenten B), gegebenenfalls C) sowie D) bis H), 1 bis 6:1, vorzugsweise 1,05 bis 2,5:1 und insbesondere 1,1 bis 1,8:1, beträgt.

Die Polyurethan-Hartschaumstoffe werden vorteilhafter Weise nach dem oneshot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Die Ausgangskomponenten werden bei einer Temperatur von 15 bis 90 °C, vorzugsweise von 20 bis 60 °C und insbesondere von 20 bis 35 °C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers oder einer Rührschnecke durchgeführt werden. Die Formwerkzeugtemperatur beträgt zweckmäßigerweise 20 bis 110 °C, vorzugsweise 30 bis 70 °C und insbesondere 40 bis 60 °C.

Die nach dem erfindungsgemäßen Verfahren hergestellten Polyurethan-Hartschaumstoffe weisen eine Dichte von 15 bis 300 g/l, vorzugsweise von 20 bis 100 g/l und insbesondere von 25 bis 60 g/l, auf.

Beispiele

Im Folgenden werden einige Beispiele zur Veranschaulichung der Erfindung angeführt. Dabei dienen die Beispiele nur illustrativen Zwecken und sollen keinesfalls den Umfang der Ansprüche einschränken.

Fettsäuremodifiziertes Polyetherpolyol 1

42,5 kg Glycerin, 0,2 kg Imidazol, 68,7 g Saccharose sowie 54,0 kg Biodiesel wurden bei 25 °C in einen Reaktor vorgelegt. Anschließend wurde dieser mit Stickstoff inertisiert. Der Kessel wurde auf 130 °C erhitzt und 234,5 kg Propylenoxid zu dosiert. Nach einer Abreaktionszeit von 2 h wurde für 60 Minuten unter vollem Vakuum bei 100 °C evakuiert und anschließend auf 25 °C abgekühlt. Es wurden 382 g Produkt erhalten.

Das erhaltene fettsäuremodifizierte Polyetherpolyol 1 besaß folgende Kennwerte: OH-Zahl: 414,0 mg KOH/g; Viskosität, DIN 53018 (25 °C): 3720 mPa.s; Säurezahl: kleiner 0,001 mg KOH/g; Wassergehalt: 0,007%.

Polyetherpolyol 1

99,6 kg vic-Toluylendiamin wurden bei 25 °C in einen Reaktor vorgelegt. Anschließend wurde dieser mit Stickstoff inertisiert. Der Kessel wurde auf 140 °C erhitzt und ein Gemisch aus 68,4 kg Ethylenoxid und 47,5 kg Propylenoxid zu dosiert. Nach einer Abreaktionszeit von 4 h wurde für 90 Minuten unter vollem Vakuum evakuiert und zeitgleich die Temperatur auf 25 °C abgesenkt. Bei dieser Temperatur wurden anschließend 2.1 kg 50%ige wässrige KOH-Lösung zugegeben und erneut mit Stickstoff inertisiert. Der Kessel wurde auf 140 °C erhitzt und weitere 232,8 kg Propylenoxid zu dosiert. Nach einer Abreaktionszeit von 1 h wurde für 90 Minuten unter vollem Vakuum evakuiert und anschließend auf 25 °C abgekühlt. Es wurden 397,0 kg Produkt erhalten.

Das erhaltene "Polyetherpolyol 1" besaß folgende Kennwerte: OH-Zahl: 402,5 mg KOH/g; Viskosität, DIN 53018 (25 °C): 13292 mPas; Säurezahl: kleiner 0,01 mg KOH/g; Wassergehalt: kleiner 0,01 %.

Polyetherpolyol 2 (V)

113 kg vic-Toluylendiamin wurden bei 25 °C in einen Reaktor vorgelegt. Anschließend wurde dieser mit Stickstoff inertisiert. Der Kessel wurde auf 138 °C erhitzt und 150 kg Propylenoxid zu dosiert. Nach einer Abreaktionszeit von 2 h wurde die Temperatur auf 95 °C gesenkt, 0,44 kg Imidazol zugegeben und erneut mit Stickstoff inertisiert. Bei dieser Temperatur wurden anschließend weitere 234,8 kg Propylenoxid zu dosiert. Nach einer Abreaktionszeit von 3 h wurde für 90 Minuten unter vollem Vakuum evakuiert und anschließend auf 25 °C abgekühlt. Es wurden 453 kg Produkt erhalten.

Das erhaltene "Polyetherpolyol 2" besaß folgende Kennwerte: OH-Zahl: 403,0 mg KOH/g; Viskosität, DIN 53018 (25 °C): 40948 mPa.s; Säurezahl: kleiner 0,01 mg KOH/g; Wassergehalt: kleiner 0,01 %.

Vergleichsbeispiel 1

Aus 61,65 Gew.-Teilen des fettsäuremodifizierten Polyetherpolyols 1, 20,0 Gew.-Teilen des Polyetherpolyols 2 (V), 15,0 Gew.-Teilen Tris-2-chlorisopropylphosphat (TCPP), 2,0 Gew.-Teilen silikonhaltiger Schaumstabilisator (Tegostab® B 8443 der Firma Goldschmidt), 0,5 Gew.-Teilen einer 50 gew.-%igen Lösung von Kaliumacetat in Ethylenglykol und 0,85 Gew.-Teilen Wasser wurde durch Vermischen eine Polyolkomponente hergestellt.

Die Polyolkomponente war bei 20 °C phasenstabil. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 131 umgesetzt. Die Mengen an Dimethylcyclohexylamin und Wasser wurden so ausgewählt, dass die Abbindezeit 45 $\pm$ 1 Sekunde betrug und der resultierende Schaum eine Dichte von 37 $\pm$ 1 kg/m$^3$ aufwies.

Vergleichsbeispiel 2

Aus 66,65 Gew.-Teilen des fettsäuremodifierten Polyetherpolyols 1, 15,0 Gew.-Teilen des Polyetherpolyols 2 (V), 15,0 Gew.-Teilen Tris-2-chlorisopropylphosphat (TCPP), 2,0 Gew.-Teilen silikonhaltiger Schaumstabilisator (Tegostab® B 8443 der Firma Goldschmidt), 0,5 Gew.-Teilen einer 50 gew.-%igen Lösung von Kaliumacetat in Ethylenglykol und 0,85 Gew.-Teilen Wasser wurde durch Vermischen eine Polyolkomponente hergestellt.

Die Polyolkomponente war bei 20 °C phasenstabil. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 132 umgesetzt. Die Mengen an Dimethylcyclohexylamin und Wasser wurden so ausgewählt, dass die Abbindezeit 45 $\pm$ 1 Sekunde betrug und der resultierende Schaum eine Dichte von 37 $\pm$ 1 kg/m$^3$ aufwies.

Beispiel 1

Aus 61,65 Gew.-Teilen des fettsäuremodifizierten Polyetherpolyols 1, 20,0 Gew.-Teilen des Polyetherpolyols 1, 15,0 Gew.-Teilen Tris-2-chlorisopropylphosphat (TCPP), 2,0 Gew.-Teilen silikonhaltiger Schaumstabilisator (Tegostab® B 8443 der Firma Goldschmidt), 0,5 Gew.-Teilen einer 50 gew.-%igen Lösung von Kaliumacetat in Ethylenglykol und 0,85 Gew.-Teilen Wasser wurde durch Vermischen eine Polyolkomponente hergestellt.

Die Polyolkomponente war bei 20 °C phasenstabil. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 132 umgesetzt. Die Mengen an Dimethylcyclohexylamin und Wasser wurden so ausgewählt, dass die Abbindezeit 45 ± 1 Sekunde betrug und der resultierende Schaum eine Dichte von 37 ± 1 kg/m³ aufwies.

Beispiel 2

Aus 66,65 Gew.-Teilen des fettsäuremodifizierten Polyetherpolyols 1, 15,0 Gew.-Teilen des Polyetherpolyols 1, 15,0 Gew.-Teilen Tris-2-chlorisopropylphosphat (TCPP), 2,0 Gew.-Teilen silikonhaltiger Schaumstabilisator (Tegostab® B 8443 der Firma Goldschmidt), 0,5 Gew.-Teilen einer 50 gew.-%igen Lösung von Kaliumacetat in Ethylenglykol und 0,85 Gew.-Teilen Wasser wurde durch Vermischen eine Polyolkomponente hergestellt.

Die Polyolkomponente war bei 20 °C phasenstabil. Diese wurde mit einem Polymer-MDI mit einem NCO-Gehalt von 31,5 Gew.-% (Lupranat® M50 der BASF SE) in Anwesenheit von n-Pentan (7,5 Gew.-Teile), Dimethylcyclohexylamin und Wasser bei einem Isocyanatindex von 132 umgesetzt. Die Mengen an Dimethylcyclohexylamin und Wasser wurden so ausgewählt, dass die Abbindezeit 45 ± 1 Sekunde betrug und der resultierende Schaum eine Dichte von 37 ± 1 kg/m³ aufwies.

Messung der Sprödigkeit

Die Messung der Sprödigkeit wurde mit dem Bolzentest durchgeführt. Die Messung erfolgte 3; 4; 5; und 6 Minuten nach Beginn der Vermischung von 80 g Reaktionsgemisch der Komponenten A bis H in einem Becher aus Polypropylen mit dem Volumen von 1,15 l.

Zur Messung wurde ein Stahlbolzen mit einer Kugelkalotte von 10 mm Radius bei einer Prüfgeschwindigkeit von 100 mm/Minute 10 mm tief in den entstandenen Schaumpilz eingedrückt. Jede Messung erfolgte an einer anderen Stelle im gleichen Abstand zum Mittelpunkt der Schaumoberfläche. Ein Einreißen der Schaumoberfläche bei der entsprechenden Messung wurde gegebenenfalls notiert.

Messung der Nadelhöhe

80 g des Reaktionsgemisches der Komponenten A bis H wurde in einem Pappbecher mit dem Volumen 0,735 l vermischt. Zum Zeitpunkt der eingestellten Abbindezeit wurde eine Stecknadel am oberen Becherrand in den Schaum gedrückt. Nachdem der Steigvorgang des Polyurethanschaumpilzes beendet war, konnte die Längendifferenz zwischen Becherrand und Nadel mit einem Lineal abgelesen werden.

Messung der Viskosität

Die gemessenen Viskositäten wurden analog DIN 53018 bei 20 °C bestimmt.

Messung des Fließverhaltens

Zur Messung wurde ein durchsichtiger, flach aufgerollter Polyamid Schlauch verwendet. Im flachen Zustand besaß der Schlauch eine Breite von 7,0 cm und im geöffneten Zustand einen Durchmesser von 4,5 cm. Zur Befüllung mit dem Reaktionsgemisch wurde der Schlauch um ca. 100 cm vom Coil abgewickelt und an einem Stativ ca. 30 cm oberhalb des Labortisches befestigt. Ein Weithalstrichter im oberen Ende der Schlauchöffnung diente zur einfachen Befüllung, ein Kabelbinder kurz unterhalb des Trichters ermöglichte ein luftdichtes Verschließen des Schlauchs unmittelbar nach dem Befüllen.

Zur Messung wurden 100 g des Reaktionsgemisches der Komponenten A bis H in einem Pappbecher mit dem Volumen 0,735 l für 7 Sekunden bei 1500 U/min gut vermischt und im direkten Anschluss für 10 Sekunden in den Schlauch umgestürzt. Die offene Seite des Schlauchs wurde dann sofort mit dem Kabelbinder verschlossen, so dass der expandierende Schaum gezwungen wurde, durch den flachen Schlauch in Richtung des Coils zu fließen. Direkt im Anschluss daran wurde der Becher mit dem restlichen Reaktionsgemisch zurückgewogen, um die genaue Materialmenge zu ermitteln, die im Schlauch vorhanden ist. Nach vollständiger Expansion des Schaums wurde der zurückgelegte Fließweg in cm notiert.

Aus diesen Daten ließ sich die theoretische Schlauchlänge wie folgt berechnen:

$$theoretische\ Schlauchl\ddot{a}nge\ [cm] = \frac{100\ g \cdot Flie\beta weg\ [cm]}{Materialmenge\ im\ Schlauch\ [g]}$$

Die Ergebnisse der Versuche sind in Tabelle 1 zusammengefasst:

Tabelle 1

| | Beispiel 1 | VergleichsBeispiel 1 | Beispiel 2 | VergleichsBeispiel 2 |
|---|---|---|---|---|
| Fettsäuremodifiziertes Polyetherpolyol 1 | 61,65 | 61,65 | 66,65 | 66,65 |
| Polyetherpolyol 1 | 20 | | 15 | |
| Polyetherpolyol 2 (V) | | 20 | | 15 |
| TCPP | 15 | 15 | 15 | 15 |
| Tegostab B 8443 | 2 | 2 | 2 | 2 |
| 50 Gew.-%ige Lösung von Kaliumacetat in Ethylenglycol | 0,5 | 0,5 | 0,5 | 0,5 |
| Wasser | 0,85 | 0,85 | 0,85 | 0,85 |
| Abbindezeit [s] | 46 | 45 | 45 | 46 |
| Rohdichte [kg/m$^3$] | 37,1 | 36,8 | 37,0 | 36,7 |
| Viskosität der Polyolkomponente, 20 °C [mPa*s] | 3160 | 3570 | 3000 | 3300 |
| Nadelhöhe [cm] | 2,3 | 2,5 | 2,3 | 2,5 |
| Theoretische Schaumlänge [cm] | 138 | 134 | 137 | 135 |
| Riss in Oberfläche nach 3,0 min | Nein | Ja | Nein | Nein |
| Riss in Oberfläche nach 4,0 min | Nein | Ja | Nein | Ja |
| Riss in Oberfläche nach 5,0 min | Ja | Ja | Ja | Ja |
| Riss in Oberfläche nach 6,0 min | Ja | Ja | Ja | Ja |

Vergleichsbeispiel 1 und 2 entsprechen gängigen, aus dem Stand der Technik bekannten Formulierungen.
Beispiel 1 und Beispiel 2 zeigen gegenüber Vergleichsbeispiel 1 und Vergleichsbeispiel 2 überraschenderweise eine geringere Nadelhöhe. Die Nadelhöhe ist ein Maß für das Nachdrücken des Schaums nach dem Abbinden. Geringe Nadelhöhen wirken sich beispielsweise bei der kontinuierlichen Verarbeitung zu Verbundelementen mit starren Deckschichten vorteilhaft auf die Druckfestigkeit in Steigrichtung aus, da die Zellen in dieser Richtung weniger stark komprimiert vorliegen als bei größeren Nadelhöhen.
Beispiel 1 und Beispiel 2 zeigen gegenüber Vergleichsbeispiel 1 und Vergleichsbeispiel 2 überraschenderweise auch ein weniger sprödes Verhalten, was sich in der Prüfung durch ein späteres Einreißen der Oberfläche bemerkbar macht.
Die Systeme hergestellt aus Beispiel 1 und Beispiel 2 zeigen außerdem überraschenderweise leicht höhere Werte in der theoretischen Schlauchlänge als Systeme hergestellt aus Vergleichsbeispiel 1 und Vergleichsbeispiel 2. Die theoretische Schlauchlänge charakterisiert den Materialfluss des sich expandierenden Schaums. Höhere Werte sind allgemein vorteilhaft, da die vollständige Schaumausfüllung der Formteile leichter erfolgen kann.
Weiterhin zeigen Beispiel 1 und Beispiel 2 gegenüber Vergleichsbeispiel 1 und Vergleichsbeispiel 2 Viskositäten, die auf herkömmlichen Doppelbandanlagen ohne Mischungsprobleme verarbeitet werden können.

**Patentansprüche**

1. Verfahren zur Herstellung von Polyurethan-Hartschaumstoffen oder Polyisocyanurat-Hartschaumstoffen umfassend die Umsetzung von

A) mindestens einem Polyisocyanat,
B) mindestens einem fettsäuremodifiziertem Polyetherpolyol,
C) mindestens einem Polyetherpolyol,
D) gegebenenfalls einem oder mehrerer Polyole, die sich von denen der Komponente B) und C) unterscheiden,
E) gegebenenfalls einem oder mehrerer Flammschutzmittel,

F) einem oder mehrerer Treibmittel,
G) einem oder mehrerer Katalysatoren, und
H) gegebenenfalls weiterer Hilfsmittel und/oder Zusatzstoffe,

**dadurch gekennzeichnet, dass** Komponente C) erhalten wird durch ein Verfahren umfassend

c1) die Umsetzung von ortho-Toluylendiamin und gegebenenfalls weitere Co-Starter mit mindestens einem Alkylenoxid umfassend Ethylenoxid, wobei der Gehalt an Ethylenoxid mehr als 20 Gew.-% bezogen auf die Gewichtsmenge der Alkylenoxide beträgt, und anschließend

c2) die Umsetzung des Reaktionsproduktes aus Stufe c1) mit mindestens einem Alkylenoxid umfassend Propylenoxid, wobei der Gehalt an 1,2-Propylenoxid mehr als 20 Gew.-% bezogen auf die Gewichtsmenge der Alkylenoxide beträgt, in Anwesenheit eines Katalysators.

2. Verfahren nach Anspruch 1, wobei Komponente B) mindestens ein Umsetzungsprodukt von

B1) 15 bis 63 Gew.-% eines oder mehrerer Polyole oder Polyamine mit einer mittleren Funktionalität von 2,5 bis 8,
B2) 2 bis 30 Gew.-% einer oder mehrerer Fettsäuren und/oder Fettsäuremonoester,
B3) 35 bis 83 Gew.-% eines oder mehrerer Alkylenoxide mit 2 bis 4 C-Atomen,

jeweils bezogen auf die Gewichtsmenge der Komponenten B1) bis B3), die 100 Gew.-% ergibt, enthält.

3. Verfahren nach Anspruch 1 oder 2, wobei die Polyole oder Polyamine der Komponente B1) ausgewählt sind aus der Gruppe bestehend aus Zuckern, Pentaerythrit, Sorbit, Trimethylolpropan, Glycerin, Toluylendiamin, Ethylendiamin, Ethylenglycol, Propylenglycol und Wasser.

4. Verfahren nach einem oder mehreren der Ansprüche 1 bis 3, wobei die Komponente B1) ein Gemisch aus Glycerin und Saccharose enthält.

5. Verfahren nach einem oder mehreren der Ansprüche 1 bis 4, wobei die Komponente B2) Ölsäure oder ein Ölsäurederivat enthält.

6. Polyurethan-Hartschaumstoffe nach einem oder mehreren der Ansprüche 1 bis 5, wobei das Alkylenoxid der Komponente B3) Propylenoxid ist.

7. Verfahren nach einem oder mehreren der Ansprüche 1 bis 6, wobei die Komponente B) eine OH-Zahl von 200 bis 700 mg KOH/g aufweist.

8. Verfahren nach einem oder mehreren der Ansprüche 1 bis 7, wobei die Komponente B) eine Funktionalität von 2,5 bis 8 aufweist.

9. Verfahren nach einem oder mehreren der Ansprüche 1 bis 8, wobei zur Herstellung von Komponente B) ein aminischer Alkoxylierungskatalysator mitverwendet wird.

10. Verfahren nach einem oder mehreren der Ansprüche 1 bis 9, wobei im Rahmen von Schritt c1) ausschließlich ortho-Toluylendiamin als Starter verwendet wird.

11. Verfahren nach einem oder mehreren der Ansprüche 1 bis 10, wobei im Rahmen von Schritt c1) von 50 bis 100 Gew.-% Ethylenoxid bezogen auf die Gewichtsmenge aller Alkylenoxide umgesetzt wird.

12. Verfahren nach einem oder mehreren der Ansprüche 1 bis 11, wobei im Rahmen von Schritt c2) von 70 bis 100 Gew.-% 1,2-Propylenoxid bezogen auf die Gewichtsmenge aller Alkylenoxide umgesetzt wird

13. Verfahren nach einem oder mehreren der Ansprüche 1 bis 12, wobei Komponente C) in einem Anteil von 1 bis 50 Gew.-% bezogen auf die Summe der Komponenten B bis H eingesetzt wird.

14. Verfahren nach einem oder mehreren der Ansprüche 1 bis 13, wobei kein Polyol D) verwendet wird, dass sich von den Komponenten B) und C) unterscheidet.

**15.** Verfahren nach einem oder mehreren der Ansprüche 1 bis 14, wobei Komponente E) in einem Anteil von 0 bis 30 Gew.-% bezogen auf die Summe der Komponenten B bis H eingesetzt wird.

**16.** Verfahren nach einem oder mehreren der Ansprüche 1 bis 15, wobei Komponente E) ausschließlich Tris-(2-chlorpropyl)phosphat (TCPP) ist.

**17.** Polyurethan- oder Polyisocyanurat-Hartschaumstoffe erhältlich gemäß einem oder mehreren der Ansprüche 1 bis 16.

**18.** Verwendung der Polyurethan-Hartschaumstoffe oder Polyisocyanurat-Hartschaumstoffe gemäß Anspruch 17 zur Herstellung von Sandwichelementen mit starren oder flexiblen Deckschichten.

**19.** Polyolmischung enthaltend die Komponenten B), C) sowie gegebenenfalls D), E), F) G) und H) jeweils wie in den Ansprüchen 1 bis 16 definiert.

**20.** Polyolmischung nach Anspruch 19 enthaltend

20 bis 90 Gew.-% der fettsäuremodifizierten Polyetherpolyole B),
1 bis 50 Gew.-% der Polyetherpolyole C),
0 bis 35 Gew.-% der Polyole D),
0 bis 30 Gew.-% Flammschutzmittel E),
0,001 bis 15 Gew.-% der Katalysatoren G),
0,01 bis 10 Gew.-% der Hilfsmittel und/oder Zusatzstoffe H),

gegebenenfalls 1 bis 45 Gew.-% Treibmittel F),
jeweils bezogen auf das Gesamtgewicht der Komponenten B) bis H), wobei sich die Gew.-% zu 100 Gew.-% ergänzen.

**Claims**

**1.** A process for producing rigid polyurethane foams or rigid polyisocyanurate foams comprising the reaction of

A) at least one polyisocyanate,
B) at least one fatty acid modified polyetherpolyol,
C) at least one polyetherpolyol,
D) optionally one or more polyols other than those of components B) and C),
E) optionally one or more flame retardants,
F) one or more blowing agents,
G) one or more catalysts, and
H) optionally further auxiliaries and/or admixture agents,

wherein component C) is obtained by a process comprising

c1) reacting orthotolylenediamine and optionally further co-starters with at least one alkylene oxide comprising ethylene oxide wherein the ethylene oxide content is more than 20 wt%, based on the weight amount of alkylene oxides, and then
c2) reacting the reaction product from step c1) with at least one alkylene oxide comprising propylene oxide wherein the 1,2-propylene oxide content is more than 20 wt%, based on the weight amount of alkylene oxides, in the presence of a catalyst.

**2.** The process according to claim 1 wherein component B) comprises at least one reaction product of

B1) 15 to 63 wt% of one or more polyols or polyamines having an average functionality of 2.5 to 8,
B2) 2 to 30 wt% of one or more fatty acids and/or fatty acid monoesters,
B3) 35 to 83 wt% of one or more alkylene oxides having 2 to 4 carbon atoms,

all based on the weight amount of components B1) to B3), which adds up to 100 wt%.

3. The process according to claim 1 or 2 wherein the polyols or polyamines of component B1) are selected from the group consisting of sugars, pentaerythritol, sorbitol, trimethylolpropane, glycerol, tolylenediamine, ethylenediamine, ethylene glycol, propylene glycol and water.

4. The process according to one or more of claims 1 to 3 wherein said component B1) comprises a mixture of glycerol and sucrose.

5. The process according to one or more of claims 1 to 4 wherein said component B2) comprises oleic acid or an oleic acid derivative.

6. A rigid polyurethane foam according to one or more of claims 1 to 5 wherein the alkylene oxide of component B3) is propylene oxide.

7. The process according to one or more of claims 1 to 6 wherein said component B) has an OH number of 200 to 700 mg KOH/g.

8. The process according to one or more of claims 1 to 7 wherein said component B) has a functionality of 2.5 to 8.

9. The process according to one or more of claims 1 to 8 wherein component B) is produced using an aminic alkoxylation catalyst.

10. The process according to one or more of claims 1 to 9 wherein exclusively orthotolylenediamine is used as starter in step c1).

11. The process according to one or more of claims 1 to 10 wherein from 50 to 100 wt% of ethylene oxide is reacted in step c1) based on the weight amount of all alkylene oxides.

12. The process according to one or more of claims 1 to 11 wherein from 70 to 100 wt% of 1,2-propylene oxide is reacted in step c2) based on the weight amount of all alkylene oxides.

13. The process according to one or more of claims 1 to 12 wherein component C) is used in a proportion of 1 to 50 wt% based on total components B to H.

14. The process according to one or more of claims 1 to 13 wherein no polyol D) other than components B) and C) is used.

15. The process according to one or more of claims 1 to 14 wherein component E) is used in a proportion of 0 to 30 wt% based on total components B to H.

16. The process according to one or more of claims 1 to 15 wherein component E) is exclusively tris(2-chloropropyl) phosphate (TCPP).

17. A rigid polyurethane or polyisocyanurate foam obtainable according to one or more of claims 1 to 16.

18. The use of rigid polyurethane foams or rigid polyisocyanurate foams according to claim 17 for production of sandwich elements having rigid or flexible outer layers.

19. A polyol mixture comprising said components B), C) and also optionally D), E), F), G) and H) each as defined in claims 1 to 16.

20. The polyol mixture according to claim 19 comprising

20 to 90 wt% of fatty acid modified polyetherpolyols B),
1 to 50 wt% of polyetherpolyols C),
0 to 35 wt% of polyols D),
0 to 30 wt% of flame retardants E),
0,001 to 15 wt% of catalysts G),
0,01 to 10 wt% of auxiliaries and/or admixture agents H),

optionally 1 to 45 wt% of blowing agents F),
all based on the total weight of components B) to H), wherein the wt% sum to 100 wt%.

**Revendications**

1. Procédé de fabrication de mousses dures de polyuréthane ou de mousses dures de polyisocyanurate comprenant la mise en réaction de

      A) au moins un polyisocyanate,
      B) au moins un polyéther-polyol modifié par un acide gras,
      C) au moins un polyéther-polyol,
      D) éventuellement un ou plusieurs polyols différents de ceux des composants B) et C),
      E) éventuellement un ou plusieurs agents ignifuges,
      F) un ou plusieurs agents gonflants,
      G) un ou plusieurs catalyseurs, et
      H) éventuellement d'autres adjuvants et/ou additifs,

      **caractérisé en ce que** le composant C) est obtenu par un procédé comprenant

      c1) la mise en réaction d'ortho-toluylènediamine et éventuellement d'autres co-démarreurs avec au moins un oxyde d'alkylène comprenant de l'oxyde d'éthylène, la teneur en oxyde d'éthylène étant de plus de 20 % en poids, par rapport à la quantité en poids des oxydes d'alkylène, puis
      c2) la mise en réaction du produit de réaction de l'étape c1) avec au moins un oxyde d'alkylène comprenant de l'oxyde de propylène, la teneur en oxyde de 1,2-propylène étant de plus de 20 % en poids, par rapport à la quantité en poids des oxydes d'alkylène, en présence d'un catalyseur.

2. Procédé selon la revendication 1, dans lequel le composant B) contient au moins un produit de réaction de

      B1) 15 à 63 % en poids d'un ou de plusieurs polyols ou d'une ou de plusieurs polyamines ayant une fonctionnalité moyenne de 2,5 à 8,
      B2) 2 à 30 % en poids d'un ou de plusieurs acides gras et/ou monoesters d'acides gras,
      B3) 35 à 83 % en poids d'un ou de plusieurs oxydes d'alkylène de 2 à 4 atomes C,

à chaque fois par rapport à la quantité en poids des composants B1) à B3), qui est de 100 % en poids.

3. Procédé selon la revendication 1 ou 2, dans lequel les polyols ou polyamines du composant B1) sont choisis dans le groupe constitué par les sucres, la pentaérythrite, le sorbitol, le triméthylolpropane, la glycérine, la toluylènediamine, l'éthylènediamine, l'éthylène glycol, le propylène glycol et l'eau.

4. Procédé selon une ou plusieurs des revendications 1 à 3, dans lequel le composant B1) contient un mélange de glycérine et de saccharose.

5. Procédé selon une ou plusieurs des revendications 1 à 4, dans lequel le composant B2) contient de l'acide oléique ou un dérivé de l'acide oléique.

6. Mousses dures de polyuréthane selon une ou plusieurs des revendications 1 à 5, dans lesquelles l'oxyde d'alkylène du composant B3) est l'oxyde de propylène.

7. Procédé selon une ou plusieurs des revendications 1 à 6, dans lequel le composant B) présente un indice OH de 200 à 700 mg KOH/g.

8. Procédé selon une ou plusieurs des revendications 1 à 7, dans lequel le composant B) présente une fonctionnalité de 2,5 à 8.

9. Procédé selon une ou plusieurs des revendications 1 à 8, dans lequel un catalyseur d'alcoxylation aminé est utilisé pour la fabrication du composant B).

**10.** Procédé selon une ou plusieurs des revendications 1 à 9, dans lequel de l'ortho-toluylènediamine est utilisée exclusivement en tant que démarreur dans le cadre de l'étape c1).

**11.** Procédé selon une ou plusieurs des revendications 1 à 10, dans lequel 50 à 100 % en poids d'oxyde d'éthylène, par rapport à la quantité en poids de tous les oxydes d'alkylène, est utilisé dans le cadre de l'étape c1).

**12.** Procédé selon une ou plusieurs des revendications 1 à 11, dans lequel 70 à 100 % en poids d'oxyde de 1,2-propylène, par rapport à la quantité en poids de tous les oxydes d'alkylène, est utilisé dans le cadre de l'étape c2).

**13.** Procédé selon une ou plusieurs des revendications 1 à 12, dans lequel le composant C) est utilisé en une proportion de 1 à 50 % en poids, par rapport à la somme des composants B à H.

**14.** Procédé selon une ou plusieurs des revendications 1 à 13, dans lequel aucun polyol D) différent des composants B) et C) n'est utilisé.

**15.** Procédé selon une ou plusieurs des revendications 1 à 14, dans lequel le composant E) est utilisé en une proportion de 0 à 30 % en poids, par rapport à la somme des composants B à H.

**16.** Procédé selon une ou plusieurs des revendications 1 à 15, dans lequel le composant E) est exclusivement le phosphate de tris-(2-chloropropyle) (TCPP).

**17.** Mousses dures de polyuréthane ou de polyisocyanurate, pouvant être obtenues selon une ou plusieurs des revendications 1 à 16.

**18.** Utilisation des mousses dures de polyuréthane ou des mousses dures de polyisocyanurate selon la revendication 17 pour la fabrication d'éléments en sandwich à couches supérieures rigides ou flexibles.

**19.** Mélange de polyols contenant les composants B), C) et éventuellement D), E), F), G) et H), chacun tels que définis dans les revendications 1 à 16.

**20.** Mélange de polyols selon la revendication 19, contenant

20 à 90 % en poids des polyéther-polyols modifiés par un acide gras B),
1 à 50 % en poids des polyéther-polyols C),
0 à 35 % en poids des polyols D),
0 à 30 % en poids des agents ignifuges E),
0,001 à 15 % en poids des catalyseurs G),
0,01 à 10 % en poids des adjuvants et/ou additifs H),

éventuellement 1 à 45 % en poids des agents gonflants F),
à chaque fois par rapport au poids total des composants B) à H), la somme des % en poids étant de 100 % en poids.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 421269 A
- EP 0728783 A1
- EP 0826708 A1
- WO 2010106067 A1
- EP 1923417 A

**In der Beschreibung aufgeführte Nicht-Patentliteratur**

- Kunststoffhandbuch, Band VII, Polyurethane. Carl Hanser Verlag, 1966, vol. VII
- **VON J.H. SAUNDERS ; K.C. FRISCH.** High Polymers. Verlag Interscience Publishers, 1962, vol. XVI
- Kunststoff-Handbuch, Polyurethane. Hanser-Verlag, München, 1966, vol. VII